# EUROPÄISCHE PATENTSCHRIFT

(11) **EP 1 658 129 B1**
(45) Veröffentlichungstag und Bekanntmachung des Hinweises auf die Patenterteilung: **04.11.2009**
(21) Anmeldenummer: 04739596.7
(22) Anmeldetag: 04.06.2004
(51) Int. Cl.: B01F 13/00, B01F 5/04, B01J 19/00, A61K 8/00, A61K 9/00

(54) **STATISCHER MIKROMISCHER**
STATIC MICROMIXER
MICRO-MELANGEUR STATIQUE

(30) Priorität: 25.07.2003 DE 10333922
(43) Veröffentlichungstag der Anmeldung: 24.05.2006
(73) Patentinhaber: The Procter and Gamble Company, Cincinnati, Ohio 45202 (US)
(72) Erfinder: SCHANZ, Gerhard, 64295 Darmstadt (DE); SENDELBACH, Gerhard, 64297 Darmstadt (DE)
(74) Vertreter: Hirsch, Uwe Thomas M.H.
(86) Internationale Anmeldenummer: PCT/EP2004/006042
(87) Internationale Veröffentlichungsnummer: WO 2005/018786

(56) Entgegenhaltungen:
- WO-A-01/43857
- DE-U- 20 206 371
- US-A- 5 887 977
- US-B1- 6 494 614

## Beschreibung

Gegenstand der Erfindung ist ein statischer Mikromischer zur Durchführung chemischer Reaktionen.

Ziel beim Mischen mindestens zweier Fluide ist das Erreichen einer gleichförmigen Verteilung der beiden Fluide in einer bestimmten, in der Regel möglichst kurzen Zeit. Bei dynamischen Mischern erfolgt das Mischen unter Verwendung von mechanisch betriebenen Rührern durch Erzeugung von turbulenten Strömungsverhältnissen. Dynamische Mischer haben den Nachteil, dass sie sich aufgrund der erforderlichen mechanischen Bauteile nicht ohne weiteres verkleinern lassen. Bei statischen Mischern erfolgt die Durchmischung ohne einen Einsatz von beweglichen Teilen. Diese Mischer lassen sich zu den sogenannten statischen Mikromischern verkleinern, von denen verschiedene Ausführungsformen bekannt sind. Vorteile von statischen Mikromischern sind die Verkleinerung der Bauteilgrösse und damit Integrierbarkeit in weitere Systeme, wie Wärmetauscher und Reaktoren. Durch das Zusammenwirken zweier oder mehrerer auf engem Raum zusammengeschalteter Komponenten ergeben sich weitere Möglichkeiten der Prozessoptimierung. Die in statischen Mikromischern erzielbare sehr enge Verteilung der Mischzeiten erlaubt vielfältige Möglichkeiten der Optimierung von chemischen Umsetzungen im Hinblick auf Selektivität und Ausbeute. Es können Mischzeiten zwischen 1 s und wenigen Millisekunden erzielt werden, wobei die Vermischung von Gasen noch deutlich schneller stattfinden kann. Die Anwendungspotenziale von Mikrovermischern erstrecken sich von flüssig-flüssig und gas-gas Mischungen zur Bildung von flüssig-flüssig Emulsionen, gas-flüssig Dispersionen und damit auch zu Mehrphasen- und Phasentransfer-Reaktionen.

Eine Klasse von Mikromischern beruht auf diffusionskontrollierten Mischvorgängen. Hierfür werden abwechselnd benachbarte Fluidlamellen einer Stärke im Mikrometerbereich erzeugt. Durch die Wahl der Geometrie ist ein Einstellen der Breite der Fluidlamellen und damit der Diffusionswege möglich. Derartige statische Mikromischer werden z.B. beschrieben in DE 199 27 556 A1, DE 202 06 371 U1, WO 02/089962. Nachteil der auf Diffusion zwischen mikroskopischen Fluidlamellen beruhender Mikromischer ist, dass eine relativ geringe Strömungsgeschwindigkeit zur Erzeugung und Aufrechterhaltung laminarer Strömungsverhältnisse erforderlich ist. Mit diesem Mischprinzip sind nur relativ geringe Durchsätze möglich.

Außerdem sind Mikromischer bekannt, die aus mit durchgehenden Kanälen versehenen Führungsbauteilen oder mit Nuten versehenen Folien bestehen, die beim Übereinanderschichten eine Anzahl von Kanälen für die verschiedenen, zu vermischenden Fluide ergeben, wobei die Dimensionen der Kanäle im Mikrometerbereich liegen. Die Eduktströme treten als benachbarte Fluidlamellen aus den Kanälen in einen Mischraum aus, wobei die Vermischung durch Diffusion und/oder Turbulenz erfolgt (siehe insbesondere WO 97/17130 und dort zitierte Literatur sowie WO 97/17133, WO 95/30475, WO 97/16239, WO 00/78438). Die Herstellung dieser Bauteile ist relativ teuer und aufwändig und es können bei der Durchleitung der zu mischenden Fluide durch eine Vielzahl langer und sehr schmaler Kanäle relativ hohe Druckverluste auftreten. Dies kann den Einsatz starker Pumpsysteme erforderlich machen, wenn hohe Durchsätze erreicht werden sollen.

Aus der WO 01/43857A1 ist ein statischer Mikromischer bekannt, der ein Gehäuse mit mindestens zwei Fluidzuführungen, mindestens einer Fluidabführung und mindestens 2 im Gehäuse zu einem Stapel angeordnete Platten aufweist, wobei die Platten so übereinander liegen, dass die Eintrittsöffnungen Nebenkanäle zum Zuführen des jeweiligen Eduktstroms und die Mischzonen einen Hauptkanal zum Abführen des Produktstroms bilden und sich die Haupt- und Nebenkanäle durch den Stapel erstrecken.

Aus der US 6,494,614 B1 ist ein Bauteil für einen statischen Mikromischer in Form einer Platte bekannt, welche
- mindestens eine Eintrittsöffnung für den Eintritt mindestens eines Eduktstroms in einen in der Plattenebene liegenden Verbindungskanal und mindestens eine Austrittsöffnung für den Austritt des Eduktstroms in eine in der Plattenebene liegende Mischzone aufweist,
- wobei die Eintrittsöffnung mit der Austrittsöffnung durch den in der Plattenebene liegenden Verbindungskanal kommunizierend verbunden ist,
- wobei der Verbindungskanal vor der Mündung in die Mischzone durch Mikrostruktureinheiten in zwei oder mehr Teilkanäle aufgespalten wird,
- wobei die Breiten der Teilkanäle im Millimeter bis Submillimeterbereich liegen und kleiner sind als die Breite der Mischzone, und
- das Verhältnis der größten Breite des Verbindungskanals zur Breite der Teilkanäle an deren Austritt in die Mischzone größer 2 ist.

Die Erfindung hat zur Aufgabe, eine Vorrichtung zum Mischen mindestens zweier Fluide zur Verfügung zu stellen, die bei möglichst geringen Druckverlusten ein schnelle und intensive Durchmischung ermöglicht bei kleinem Bauraum und einfacher Herstellung der benötigten Bauteile.

Gelöst ist die Aufgabe gemäß dem Mikromischer des Anspruchs 1.

Nachfolgend wird unter dem Begriff "Fluid" ein gasförmiger oder flüssiger Stoff oder ein Gemisch solcher Stoffe verstanden, das einen oder mehrere feste, flüssige oder gasförmige Stoffe gelöst oder dispergiert enthalten kann. Der Begriff Mischen umfasst auch die Vorgänge Lösen, Dispergieren und Emulgieren. Demzufolge umfasst der Begriff Mischung Lösungen, flüssig-flüssig-Emulsionen, gas-flüssig- und festflüssig-Dispersionen. Der Begriff "Teilkanäle" umfaßt auch eine Aufspaltung des Eduktstroms in Teilströme durch Mikrostruktureinbauten unmittelbar vor dem Austritt in die Mischzone. Die Dimensionen, insbesondere die Längen und Breiten dieser Einbauten können dabei im Bereich von Millimetern liegen oder vorzugsweise kleiner 1 mm betragen. Die Teilkanäle sind vorzugsweise auf die zur Strömungskontrolle absolut nötige Länge verkürzt und erfordern daher für einen bestimmten Durchsatz vergleichbar geringe Drücke. Vorzugsweise liegt das Verhältnis der Länge zur Breite der Teilkanäle im Bereich von 1:1 bis 20:1, insbesondere von 8:1 bis 12:1, besonders bevorzugt etwa 10:1. Die Mikrostruktureinbauten sind vorzugsweise so ausgestaltet, dass die Strömungsgeschwindigkeit des Eduktstroms bei Austritt in die Mischzone sowohl größer ist als bei Eintritt in den Verbindungskanal und vorzugsweise auch größer ist als die Strömungsgeschwindigkeit des Produktstroms durch die Mischzone.

Die auf den Platten aufgebrachten Verbindungs- und Teilkanäle sind in Freiform ausführbar. Sowohl die Platten als auch jeder darauf enthaltene einzelne Kanal können in Höhe, Breite und Dicke variieren, um auch unterschiedliche Medien und Mengen fördern zu können. Die Grundform der Platten ist beliebig und kann rund z.B. kreisförmig oder elliptisch oder eckig, z.B. rechteckig oder quadratisch sein. Die Plattenform kann auch in Bezug auf eine möglichst einfache Herstellung oder in Bezug auf ein möglichst geringes Gewicht und eine möglichst geringe ungenutzte Fläche optimiert sein. Die Ausgänge der Teilkanäle können in jeder beliebigen Weise angeordnet sein, von der geraden Linie bis zur beliebigen geometrischen Form. Die Austrittsöffnungen können z.B. auf einer kreisförmigen Linie angeordnet sein, insbesondere wenn die Mischzone von der Plattenebene vollständig umschlossen vorliegt. Es lassen sich zwei bzw. mehr als zwei Komponenten (A, B, C usw.) in einer Scheibe führen und diese mit gleichen oder unterschiedlichen Mengenverhältnissen mischen. Die Teilkanäle können zueinander oder bezogen auf die Linie, auf der die Ausgänge in die Mischzone liegen, in beliebigen Winkeln verlaufen. Es können mehrere Teilkanäle nebeneinander angeordnet werden, die jeweils z.B. Komponente A führen und im benachbarten Abschnitt derselben Scheibe können mehrere Teilkanäle nebeneinander angeordnet werden, die jeweils z.B. Komponente B führen. Die Bauteile können mittels zusätzlicher Durchbrüche und zusätzlicher Teilkanäle in den Platten jedoch auch so gestaltet sein, dass sich von Teilkanal zu Teilkanal die Komponenten A, B usw. in derselben Platte abwechseln.

Die Teilkanäle weisen an der Mündung in die Mischzone bevorzugt eine Breite im Bereich von 1 µm bis 2 mm sowie eine Tiefe im Bereich von 10 µm bis 10 mm und besonders bevorzugt eine Breite im Bereich von 5 µm bis 250 µm sowie eine Tiefe im Bereich von 250 µm bis 5 mm auf.

Der Verbindungskanal kann eine variable Breite haben. Vorzugsweise ist das Verhältnis der größten Breite des Verbindungskanals und/oder der Breite der Eintrittsöffnung zur Breite der Teilkanäle an deren Austritt in die Mischzone größer 2, besonders bevorzugt größer 5. Das Verhältnis der Breite der Mischzone zur Breite der Teilkanäle ist vorzugsweise größer 2, besonders bevorzugt größer 5.

Die plattenförmigen Bauteile können eine Dicke von 10 bis 1000 µm haben. Die Höhe der Kanäle ist vorzugsweise kleiner 1000 µm, besonders bevorzugt kleiner 250 µm. Die Wanddicke der Mikrostruktureinbauten und des Kanalbodens ist vorzugsweise kleiner 100 µm, besonders bevorzugt kleiner 70 µm.

In einer besonderen Ausführungsform ist mindestens eine der Eintritts- oder Austrittsöffnungen oder die Mischzone von der Plattenebene vollständig umschlossen. Die Öffnungen liegen dann z.B. als runde oder eckige, z.B. rechteckige Ausnehmungen vor. Im Falle einer umschlossenen Mischzone ist die bevorzugte Form ellipsen- oder kreisförmig. Die Teilkanäle können sich in Form von Düsen in Richtung der Mischzone verjüngen. Die Teilkanäle können geradlinig oder spiralförmig gebogen sein. Die Teilkanäle können rechtwinklig in Bezug auf die Umfangslinie der Mischzone in die Mischzone münden oder in einem von 90° verschiedenen Winkel. Bei nicht rechtwinkligem Verlauf sind bei der Bildung eines Stapels aus mehreren Mischerplatten vorzugsweise jeweils Platten mit entgegengesetzter Abweichung vom rechten Winkel benachbart. Ebenso sind bei spiralförmigem Verlauf der Teilkanäle bei der Bildung eines Stapels aus mehreren Mischerplatten vorzugsweise jeweils Platten mit entgegengesetzter Drehrichtung der Spirale benachbart.

Der Verbindungskanal zwischen den Öffnungen ist vorzugsweise durch eine Vertiefung ausgebildet. Die Eintritts- und/oder Austrittsöffnung oder die Mischzone können aber auch am Plattenrand oder durch Aussparungen am Plattenrand angeordnet sein.

In einer weiteren besonderen Ausführungsform sind mindestens zwei Eintrittsöffnungen für mindestens zwei verschiedene Edukte vorhanden, wobei jede Eintrittsöffnung durch je einen Verbindungskanal mit der Mischzone verbunden ist. Dabei liegen vorzugsweise zwei Austrittsöffnungen für zwei verschiedene Edukte an gegenüberliegenden Seiten der Mischzone, wobei die Mischzone vorzugsweise vollständig umschlossen innerhalb der Plattenebene positioniert ist.

Als Material für die Bauteile eignen sich z.B. Metalle, insbesondere korrosionsbeständige Metalle wie z.B. Edelstahl, sowie Gläser, Keramik oder Kunststoff. Die Bauteile können hergestellt werden durch an sich bekannte Techniken zur Erzeugung von Mikrostrukturen auf Oberflächen, z.B. durch Ätzen oder Fräsen von Metallen oder durch Prägen oder Spritzen von Kunststoffen.

Ein erfindungsgemäßer statischer Mikromischer weist ein Gehäuse mit mindestens 2 Fluidzuführungen und mindestens einer Fluidabführung auf. In dem Gehäuse befinden sich mindestens 2 zu einem Stapel angeordnete erfindungsgemäße, plattenförmige Mikromischerbauteile. Aus einer beliebigen Anzahl an Platten können Stapel erzeugt werden, die einen der Stapelhöhe entsprechenden Durchfluß realisieren lassen. Um an jeder Stelle des Mischers denselben Druck zu gewährleisten, kann bei größeren Längen die Fluidzufuhr an mehreren Stellen erfolgen. Nuten oder Stege in bzw. auf den Platten können der Stapel- und Justierbarkeit dienen. Die Platten liegen so übereinander, dass die Eintrittsöffnungen Nebenkanäle zum Zuführen des jeweiligen Eduktstroms und die Austrittsöffnungen bzw. die Mischzonen zusammen einen Hauptkanal zum Abführen des Produktstroms bilden und sich die Haupt- und Nebenkanäle durch den Stapel erstrecken. Insgesamt kann der Mikromischer z.B. mindestens 5, 10, 100 oder auch mehr als 1000 Teilkanäle aufweisen und besteht aus einem Stapel von mit jeweils mehreren Teilkanälen aufweisenden Platten.

Vorzugsweise ist jeder aus einer Austrittsöffnung einer Platte in die Mischzone austretende Teilstrom eines ersten Edukts A einem aus einer Austrittsöffnung einer benachbarten Platte in die Mischzone austretenden Teilstroms eines zweiten Edukts B unmittelbar benachbart und es kommt in der Mischzone zu einer Vermischung durch Diffusion und/oder Turbulenz.

In einer Ausführungsform des Mikromischers sind die Verbindungskanäle der Platten durch Vertiefungen ausgebildet und die Verbindungskanäle werden vor der Mündung in die Mischzone durch auf den Platten angebrachte Mikrostruktureinheiten in Teilkanäle aufgespalten. In einer alternativen Ausführungsform sind die Verbindungskanäle der Platten durch Ausnehmungen in den Platten gebildet, wobei die Platten als Zwischenplatten zwischen je einer Deck- und einer Bodenplatte angeordnet sind und die Verbindungskanäle vor der Mündung in die Mischzone durch an den Deck- und/oder Bodenplatten angebrachten Mikrostruktureinheiten in Teilkanäle aufgespalten werden. In die erfindungsgemäßen Mikromischer können zur Wärmezu- oder -abführung Wärmetauscher integriert sein.

Der erfindungsgemäße Mikromischer eignet sich vor allem auch für die chemische Reaktion gasförmiger Komponenten, insbesondere für Verbrennungsreaktionen. Gegenstand der Erfindung ist deshalb ein Verbrennungsreaktor, z.B. ein Gas- oder Ölbrenner. Der Verbrennungsreaktor weist einen erfindungsgemäßen Mikromischer als wesentlichen Bestandteil sowie mindestens einen ersten Anschluß zur Zuführung eines brennbaren flüssigen oder gasförmigen Mediums und mindestens einen zweiten Anschluß zur Zuführung eines die Verbrennungsreaktion fördernden, sauerstoffhaltigen Mediums, z.B. Luft auf. Die Zufuhr dieser Komponenten kann so gestaltet werden, dass bestimmte, die Reaktion charakterisierende Größen optimiert werden. Dies gilt insbesondere für die Flammtemperatur und die durch die Reaktionen entstehenden Produkte. Im Fall der Verbrennung von Brenngas (z.B. Methan) mit atmosphärischer Luft kann die Bildung von Stickoxiden durch Senkung der Verbrennungstemperatur minimiert werden. Die Flamme kann durch geeignete konvexe oder konkave Anordnung der Austrittsöffnungen konzentriert oder auch divergierend ausgebildet werden. Durch geeignete Anordnung der Kanäle lassen sich auch örtlich begrenzte Stützflammen realisieren, die von einem der Nebenkanäle mit konstantem Gasdruck versorgt werden. Durch Zuschaltung der anderen Nebenkanäle läßt sich dann die Reaktion starten. Auch zylinderförmige Reaktionskammern (Mischzonen) zur Erzeugung von düsenähnlichen Brennern sind möglich. Neben gleichartigen Medien wie Gas/Gas lassen sich auch verschiedenartige Medien wie Gas/Flüssigkeit durchmischen, insbesondere zur Verbrennung von brennbaren Flüssigkeiten wie z.B. Benzin oder Öl.

Ein weiterer Gegenstand der Erfindung ist ein Verfahren zur Durchführung chemischer Reaktionen, wobei
- mindestens zwei zunächst getrennt gehaltene fluide Eduktströme, welche reaktionsfähige Komponenten enthalten oder daraus bestehen, miteinander vermischt werden und wobei
- während oder nach Vermischung spontan oder durch Energiezufuhr oder mittels geeigneter Katalysatoren induziert eine chemische Reaktion der Komponenten abläuft
und wobei die Vermischung unter Verwendung mindestens eines erfindungsgemäßen Bauteils oder mindestens eines erfindungsgemäßen statischen Mikromischers erfolgt.

Zur Erhöhung der Kapazität der erfindunsgemäßen Verfahren kann die Anzahl der Kanäle in den Platten erhöht werden oder die Anzahl der übereinandergeschichteten Platten in einem Mikromischer kann erhöht werden oder es können mehrere Mikromischer modulartig parallel zusammengeschaltet betrieben werden. Es können auch zwei oder mehrere Mikromischer in Reihe geschaltet hintereinander betrieben werden. Besonders vorteilhaft ist es, wenn dabei zunächst mit einem Mikromischer mit größeren Kanaldurchmessern eine gröbere Vormischung erzeugt wird und nachfolgende Mikromischer zunehmen kleinere Kanaldurchmesser aufweisen.

Nachfolgend werden beispielhafte Ausführungsformen erfindungsgemäßer Bauteile und Mikromischer anhand von Zeichnungen erläutert.
- Fig. 1a-b: Mischplatten mit zwei Eintrittsöffnungen für zwei Eduktströme wobei Ein- und Austrittsöffnungen umschlossen sind
- Fig. 1c: Mischplatte mit einer einzigen Eintrittsöffnung, wobei Ein- und Austrittsöffnungen umschlossen sind
- Fig. 1d: Mischplatte mit jeweils umschlossener Eintritts-, Durchtritts- und Austrittsöffnung
- Fig. 2a-c: Mischplatten mit drei Eintrittsöffnungen für bis zu drei verschiedene Eduktströme wobei Ein- und Austrittsöffnungen umschlossen sind
- Fig. 3a-b: Mischplatten mit zwei Eintrittsöffnungen am Plattenrand für zwei Eduktströme und umschlossener Austrittsöffnung
- Fig. 3c-d: Mischplatten mit vier Eintrittsöffnungen am Plattenrand für bis zu vier verschiedene Eduktströme und umschlossener Austrittsöffnung
- Fig. 4a-f: Mischplatten mit je einer umschlossenen Eintritts- und Durchtrittsöffnung für zwei Eduktströme und Austrittsöffnung am Plattenrand
- Fig. 5a-b: Mischplatten mit je einer umschlossenen Eintrittsöffnung und zwei umschlossenen Durchtrittsöffnungen für bis zu drei verschiedene Eduktströme und Austrittsöffnung am Plattenrand
- Fig. 6a: Längsschnitt des schematischen Aufbaus eines als Mikroreaktor einsetzbaren statischen Mikromischers
- Fig. 6b: Mischerscheibe in einem offenen Gehäuse
- Fig. 7a-b: Mischplatten mit umschlossenen Ein- und Durchtrittsöffnungen und zusätzlichen Teilkanälen, wobei benachbarte Teilkanäle von verschiedenen Edukten durchströmt werden können
- Fig. 8a, c: Mischplatten mit umschlossenen Ein- und Durchtrittsöffnungen und zusätzlichen Teilkanälen, wobei benachbarte Teilkanäle von verschiedenen Edukten durchströmt werden können
- Fig. 8b: Mischplatte mit umschlossener Eintrittsöffnung und drei umschlossenen Durchtrittsöffnungen und zusätzlichen Teilkanälen, wobei benachbarte Teilkanäle von verschiedenen Edukten durchströmt werden können
- Fig. 9: Mikromischer mit Gehäuse und einem Stapel aus mehreren Mischplatten

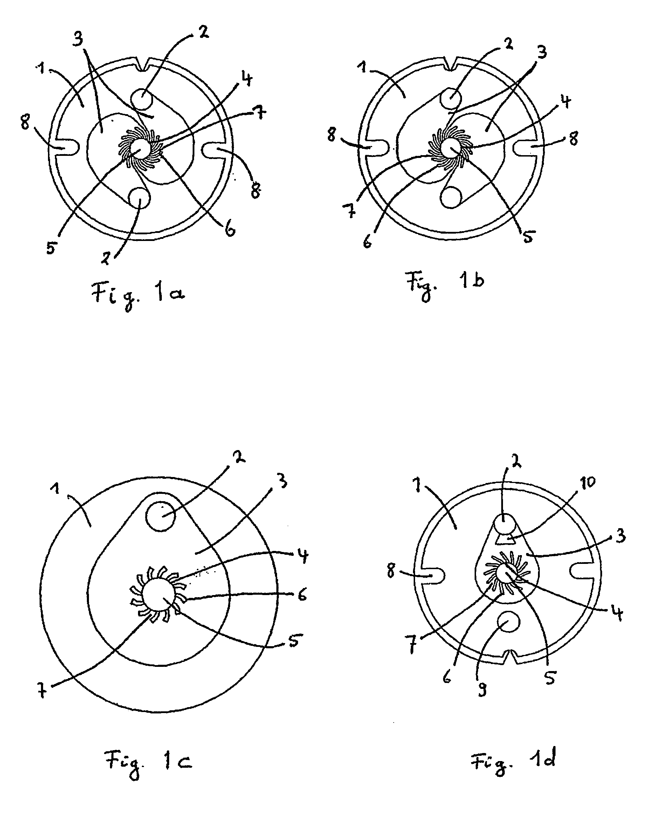

Eine Ausführungsform ist in Fig. 1a und Fig. 1b dargestellt. Die Platten (1) weisen je zwei umschlossene Eintrittsöffnungen (2) auf. Jede Eintrittsöffnung (2) ist mit je einem, in der Plattenebene durch eine Vertiefung ausgebildeten Verbindungskanal (3) verbunden. Jeder Vertiefungskanal (3) wird durch eine Vielzahl von Mikrostruktureinheiten (6) in eine Vielzahl von Teilkanälen (7) aufgespalten. Die Teilkanäle (7) münden durch die Austrittsöffnungen (4) in eine umschlossene Mischzone (5). Die Austrittsöffnungen (4) sind auf einer kreisförmigen Linie um die Mischzone (5) herum angeordnet. Mischzone (5) und Eintrittsöffnungen (2) sind als Durchbrüche in den Platten ausgebildet. Die Mikrostruktureinheiten sind beispielhaft spiralförmig gebogen ausgebildet, wobei die Spiralen in Fig.1a und Fig. 1b entgegengesetzten Drehsinn haben. Die Mikrostruktureinheiten können aber auch geradlinig, ungebogen ausgebildet sein. Wenn die Platten rund ausgebildet sind, weisen sie vorzugsweise am Rand Aussparungen (8) auf, welche mit Halterungselementen (14) in einem Gehäuse (11) zusammenwirken können, um ein Verdrehen oder Verrutschen der Platten zu vermeiden. Die Platten können aber auch eckig, vorzugsweise viereckig, z.B. quadratisch ausgebildet sein. Dann können die Aussparungen und Halterungselemente entfallen. Durch die zwei Eintrittsöffnungen (2) können zwei verschiedene Eduktströme in einer Ebene der Mischzone (5) zugeführt werden, wobei die den beiden verschiedenen Eduktströmen zugeordneten Austrittsöffnungen vorzugsweise einander gegenüber liegen. Ein Mikromischer weist vorzugsweise einen Stapel von mehreren, aufeinander liegenden Bauteilen auf, wobei sich Platten gemäß Fig. 1a mit solchen gemäß Fig. 1b abwechseln und sich ein Aufbau mit alternierender Schichtstruktur ABAB usw. ergibt. Hierdurch wird erreicht, dass zwei verschiedene Eduktströme unmittelbar benachbart über- und untereinander der Mischzone (5) zugeführt werden können. In dem Stapel liegen die Platten so übereinander, dass die Eintrittsöffnungen Nebenkanäle zum Zuführen des jeweiligen Eduktstroms und die Mischzonen einen Hauptkanal zum Abführen des Produktstroms bilden. Über den Hauptkanal kann aber auch ein die spätere kontinuierliche Phase der Mischung bildendes Fluid zugeführt werden.

Eine weitere Ausführungsform ist in Fig. 1c dargestellt. Die Platte (1) weist eine einzige umschlossene Eintrittsöffnung (2) auf, welche mit einem in der Plattenebene durch eine Vertiefung ausgebildeten Verbindungskanal (3) verbunden ist. Der Vertiefungskanal (3) wird durch eine Vielzahl von Mikrostruktureinheiten (6) in eine Vielzahl von Teilkanälen (7) aufgespalten. Die Teilkanäle (7) münden durch die Austrittsöffnungen (4) in die Mischzone (5). Die Austrittsöffnungen (4) sind auf einer kreisförmigen Linie um die Mischzone (5) herum angeordnet. Mischzone (5) und Eintrittsöffnung (2) sind als Durchbrüche in der Platte ausgebildet. Die Mikrostruktureinheiten sind beispielhaft spiralförmig gebogen ausgebildet. Die Mikrostruktureinheiten können aber auch geradlinig, ungebogen oder in beliebigen anderen geometrischen Formen ausgebildet sein. Ein Mikromischer weist vorzugsweise einen Stapel von mehreren, aufeinander liegenden Bauteilen auf. In dem Stapel liegen die Platten so übereinander, dass die Eintrittsöffnungen einen Nebenkanal zum Zuführen eines Eduktstroms und die Mischzonen einen Hauptkanal zum Abführen des Produktstroms bilden. Über den Hauptkanal kann eine der zu vermischenden Komponenten, vorzugsweise ein die spätere kontinuierliche Phase der Mischung bildendes Fluid zugeführt werden. Diese Ausführungsform ist z.B. besonders geeignet zum Begasen von Flüssigkeiten oder zur Herstellung von Dispersionen. Hierbei wird die zu begasende Flüssigkeit bzw. das Dispersionsmedium über den zentralen Hauptkanal zugeführt und das Gas bzw. der zu dispergierende Stoff wird über den Nebenkanal zugeführt. Vorteilhafterweise kann der Plattenstapel einen Aufbau mit alternierender Schichtstruktur haben, wobei abwechselnd Platten aufeinanderliegen, die spiralförmige Mikrostruktureinheiten (6) mit entgegengesetzter Drehrichtung aufweisen. Es kann aber auch nur ein einziger Plattentyp verwendet werden. Die Mikrostruktureinheiten sind dann vorzugsweise geradlinig ausgebildet und so geformt, dass die Teilkanäle Düsen bilden.

Eine weitere Ausführungsform ist in Fig. 1d dargestellt. Die Platte (1) weist eine umschlossene Eintrittsöffnung (2), eine umschlossene Mischzone (5) und eine umschlossene Durchtrittsöffnung (9) auf. Die Eintrittsöffnung (2) ist mit einem in der Plattenebene durch eine Vertiefung ausgebildeten Verbindungskanal (3) verbunden, welcher durch eine Vielzahl von Mikrostruktureinheiten (6) in eine Vielzahl von Teilkanälen (7) aufgespalten wird. Die Teilkanäle (7) münden durch die Austrittsöffnungen (4) in die Mischzone (5). Die Austrittsöffnungen (4) sind auf einer kreisförmigen Linie um die Mischzone (5) herum angeordnet. Mischzone (5), Eintrittsöffnung (2) und Durchtrittsöffnung (9) sind als Durchbrüche in der Platte ausgebildet. Die Mikrostruktureinheiten sind beispielhaft spiralförmig gebogen ausgebildet. Die Mikrostruktureinheiten können aber auch geradlinig, ungebogen oder in beliebigen anderen geometrischen Formen ausgebildet sein. Mit zusätzlichen Einbauten (10) im Verbindungskanal können die Strömungsverhältnisse im Verbindungskanal (3) optimiert werden. Wenn die Platten rund ausgebildet sind, weisen sie vorzugsweise am Rand Aussparungen (8) auf, welche mit Halterungselementen (14) in einem Gehäuse (11) zusammenwirken können, um ein Verdrehen oder Verrutschen der Platten zu vermeiden. Ein Mikromischer weist vorzugsweise einen Stapel von mehreren, aufeinanderliegenden Bauteilen auf, wobei Platten gemäß Fig. 1d abwechselnd um 180° verdreht übereinander liegen. Hierdurch wird erreicht, dass zwei verschiedene Eduktströme unmittelbar benachbart über- und untereinander der Mischzone (5) zugeführt werden können. In dem Stapel liegen die Platten so übereinander, dass sich Eintrittsöffnungen (2) und Durchtrittsöffnungen (9) abwechseln und zwei Nebenkanäle zum Zuführen von zwei Eduktströmen bilden und die Mischzonen einen Hauptkanal zum Abführen des Produktstroms bilden. Über den Hauptkanal kann aber auch ein die spätere kontinuierliche Phase der Mischung bildendes Fluid zugeführt werden. Vorteilhafterweise kann der Plattenstapel einen Aufbau mit alternierender Schichtstruktur haben, wobei abwechselnd Platten aufeinanderliegen, die spiralförmige Mikrostruktureinheiten (6) mit entgegengesetzter Drehrichtung aufweisen. Es kann aber auch nur ein einziger Plattentyp verwendet werden. Die Mikrostruktureinheiten sind dann vorzugsweise geradlinig ausgebildet und so geformt, dass die Teilkanäle Düsen bilden.

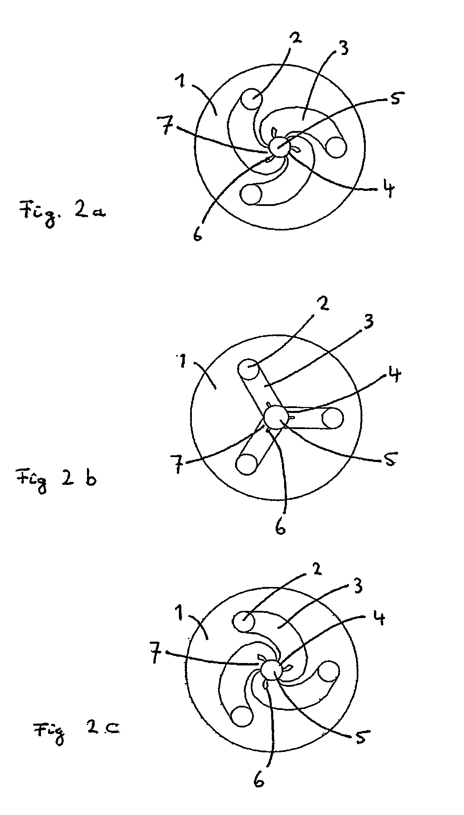

Eine weitere Ausführungsform ist in Fig. 2a bis 2c dargestellt. Die Platten (1) weisen je drei umschlossene Eintrittsöffnungen (2) auf. Jede Eintrittsöffnung (2) ist mit je einem, in der Plattenebene durch eine Vertiefung ausgebildeten Verbindungskanal (3) verbunden. Jeder Vertiefungskanal (3) wird durch mindestens eine Mikrostruktureinheit (6) in mindestens zwei Teilkanäle (7) aufgespalten. Durch eine größere Anzahl an Mikrostruktureinbauten kann eine Aufspaltung in eine entsprechend größere Anzahl an Teilkanälen erfolgen. Die Teilkanäle (7) münden durch die Austrittsöffnungen (4) in die Mischzone (5). Die Austrittsöffnungen (4) sind auf einer kreisförmigen Linie um die Mischzone (5) herum angeordnet. Mischzone (5) und Eintrittsöffnungen (2) sind als Durchbrüche in den Platten ausgebildet. Die Mikrostruktureinheiten können spiralförmig mit verschiedenen Drehrichtungen oder geradlinig ausgebildet sein. Durch die drei Eintrittsöffnungen (2) können gleiche oder bis zu drei verschiedene Eduktströme in einer Ebene der Mischzone (5) zugeführt werden. Ein Mikromischer weist vorzugsweise einen Stapel von mehreren, aufeinanderliegenden Bauteilen auf, wobei sich die verschiedenen Plattentypen gemäß Fig. 2a, 2b und 2c abwechseln und sich ein Aufbau mit alternierender Schichtstruktur, z.B. ABCABC ergibt. Hierdurch wird erreicht, dass jeweils zwei verschiedene Eduktströme unmittelbar benachbart über- und untereinander der Mischzone (5) zugeführt werden können. In dem Stapel liegen die Platten so übereinander, dass die Eintrittsöffnungen Nebenkanäle zum Zuführen des jeweiligen Eduktstroms und die Mischzonen einen Hauptkanal zum Abführen des Produktstroms bilden. Über den Hauptkanal kann aber auch ein die spätere kontinuierliche Phase der Mischung bildendes Fluid zugeführt werden.

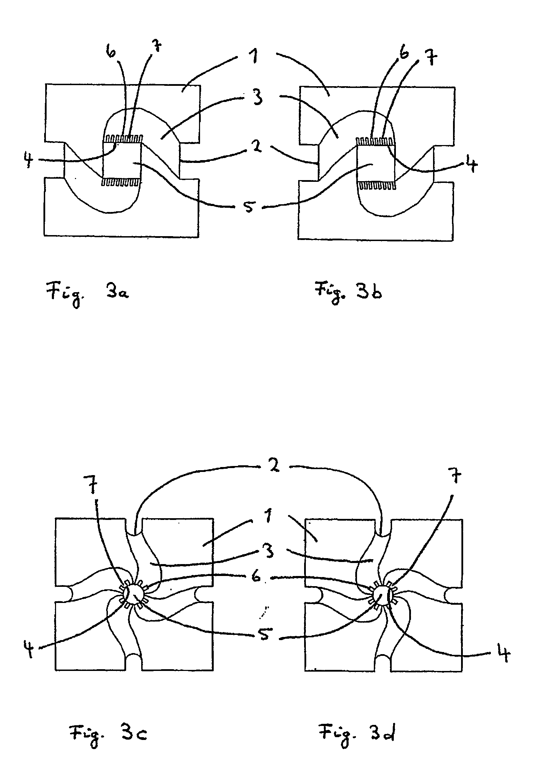

Eine weitere Ausführungsform ist in Fig. 3a und Fig. 3b dargestellt. Die Platten (1) weisen je zwei am Plattenrand positionierte Eintrittsöffnungen (2) auf. Jede Eintrittsöffnung (2) ist mit je einem, in der Plattenebene durch eine Vertiefung ausgebildeten Verbindungskanal (3) verbunden. Jeder Vertiefungskanal (3) wird durch eine Vielzahl von Mikrostruktureinheiten (6) in eine Vielzahl von Teilkanälen (7) aufgespalten. Die Teilkanäle (7) münden durch die Austrittsöffnungen (4) in eine umschlossene Mischzone (5). Die Austrittsöffnungen (4) sind auf einer geraden Linie angeordnet. Die Mischzone (5) ist beispielhaft als rechteckiger Durchbruch in den Platten ausgebildet. Die Mikrostruktureinheiten sind beispielhaft schräg zur Fließrichtung ausgebildet, wobei die Schrägen in Fig.1a und Fig. 1b entgegengesetzte Richtung aufweisen. Die Mikrostruktureinheiten können aber auch jeweils mit gleicher oder keiner Schräge ausgebildet sein. Die Platten haben in etwa quadratische Grundform, können aber auch jede beliebige andere geometrische Grundform (eckig, rund, elliptisch etc.) haben. Durch die zwei Eintrittsöffnungen (2) können zwei verschiedene Eduktströme in einer Ebene der Mischzone (5) zugeführt werden, wobei die den beiden verschiedenen Eduktströmen zugeordneten Austrittsöffnungen bevorzugt einander gegenüber liegen. Ein Mikromischer weist vorzugsweise einen Stapel von mehreren, aufeinanderliegenden Bauteilen auf, wobei sich Platten gemäß Fig. 3a mit solchen gemäß Fig. 3b abwechseln und sich ein Aufbau mit alternierender Schichtstruktur ABAB ergibt. Hierdurch wird erreicht, dass zwei verschiedene Eduktströme unmittelbar benachbart über- und untereinander der Mischzone (5) zugeführt werden können. In dem Stapel liegen die Platten so übereinander, dass die Eintrittsöffnungen zusammen mit dem Mischergehäuse am Rand des Mischers Nebenkanäle zum Zuführen des jeweiligen Eduktstroms und die Mischzonen einen Hauptkanal im Innern des Mischers zum Abführen des Produktstroms bilden. Über den Hauptkanal kann aber auch ein die spätere kontinuierliche Phase der Mischung bildendes Fluid zugeführt werden.

Eine weitere Ausführungsform ist in Fig. 3c und Fig. 3d dargestellt. Die Platten (1) weisen je vier am Plattenrand positionierte Eintrittsöffnungen (2) auf. Jede Eintrittsöffnung (2) ist mit je einem, in der Plattenebene durch eine Vertiefung ausgebildeten Verbindungskanal (3) verbunden. Jeder Vertiefungskanal (3) wird durch mehrere Mikrostruktureinheiten (6) in mehrere Teilkanäle (7) aufgespalten. Die Teilkanäle (7) münden durch die Austrittsöffnungen (4) in eine umschlossene Mischzone (5). Die Austrittsöffnungen (4) sind auf einer Kreislinie angeordnet. Die Verbindungskanäle sind spiralförmig gebogen, wobei der Drehsinn der Spiralen in Fig. 3c und Fig. 3d entgegengesetzt sind. Die Mischzone (5) ist als Durchbruch in den Platten ausgebildet. Die Mikrostruktureinheiten sind beispielhaft gerade ausgebildet, können aber auch schräg oder spiralförmig gebogen sein. Die Platten haben in etwa quadratische Grundform, können aber auch jede beliebige andere geometrische Grundform (eckig, rund, elliptisch etc.) haben. Durch die vier Eintrittsöffnungen (2) können gleiche oder bis zu vier verschiedene Eduktströme in einer Ebene der Mischzone (5) zugeführt werden, wobei die verschiedenen Eduktströmen zugeordneten Austrittsöffnungen bevorzugt einander gegenüber liegen. Ein Mikromischer weist vorzugsweise einen Stapel von mehreren, aufeinanderliegenden Bauteilen auf, wobei sich Platten gemäß Fig. 3c mit solchen gemäß Fig. 3d mit entgegengesetztem Drehsinn der spiralartig gebogenen Verbindungskanäle abwechseln und sich ein Aufbau mit alternierender Schichtstruktur ABAB ergibt. Hierdurch wird erreicht, dass zwei verschiedene Eduktströme unmittelbar benachbart über- und untereinander der Mischzone (5) zugeführt werden können. In dem Stapel liegen die Platten so übereinander, dass die Eintrittsöffnungen zusammen mit dem Mischergehäuse am Rand des Mischers Nebenkanäle zum Zuführen des jeweiligen Eduktstroms und die Mischzonen einen Hauptkanal im Innern des Mischers zum Abführen des Produktstroms bilden. Über den Hauptkanal kann aber auch ein die spätere kontinuierliche Phase der Mischung bildendes Fluid zugeführt werden.

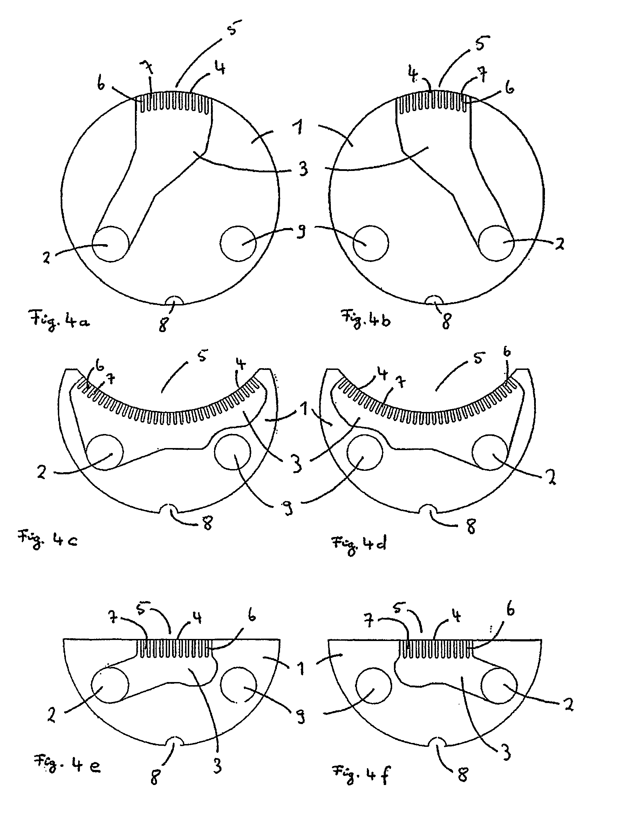

Weitere Ausführungsformen sind in Fig. 4a bis 4f dargestellt. Die Platten (1) weisen je eine umschlossene Eintrittsöffnung (2) und je eine umschlossene Durchtrittsöffnung (9) auf. Jede Eintrittsöffnung (2) ist mit je einem, in der Plattenebene durch eine Vertiefung ausgebildeten Verbindungskanal (3) verbunden. Jeder Verbindungskanal (3) wird durch eine Vielzahl von Mikrostruktureinheiten (6) in eine Vielzahl von Teilkanälen (7) aufgespalten. Die Teilkanäle (7) münden durch am Rand der Platten angeordnete Austrittsöffnungen (4) in eine außerhalb der Plattenfläche liegende Mischzone (5). Die Austrittsöffnungen (4) können auf geraden Linien (Fig. 4e, 4f) oder auf Bogensegmenten angeordnet sein, wobei die Bogensegmente konvex (Fig. 4a, 4b) oder konkav (Fig. 4c, 4d) sein können. Die Eintrittsöffnungen (2) und die Durchtrittsöffnungen (9) sind als Durchbrüche in den Platten ausgebildet. Die Mikrostruktureinheiten können parallel oder in verschiedenen Winkeln zur durch den Verbindungskanal vorgegebenen Fließrichtung angestellt sein. Wenn die Platten rund ausgebildet sind, weisen sie vorzugsweise am Rand Aussparungen (8) auf, welche mit Halterungselementen (14) in einem Gehäuse (11) zusammenwirken können, um ein Verdrehen oder Verrutschen der Platten zu vermeiden. Ein Mikromischer weist vorzugsweise einen Stapel von mehreren, aufeinanderliegenden Bauteilen auf, wobei sich Platten gemäß' Fig. 4a mit solchen gemäß Fig. 4b, bzw. Platten gemäß Fig. 4c mit solchen gemäß Fig. 4d, bzw. Platten gemäß Fig. 4e mit solchen gemäß Fig. 4f jeweils abwechseln und sich ein Aufbau mit alternierender Schichtstruktur ABAB ergibt. Hierdurch wird erreicht, dass zwei verschiedene Eduktströme unmittelbar benachbart über- und untereinander der Mischzone (5) zugeführt werden können. Vorzugsweise sind die Winkel der Teilkanäle bei der Mündung in die Mischzone in Relation zur Umfangslinie der Mischzone in benachbarten Platten verschieden, besonders bevorzugt haben sie entgegengesetzte Abweichungen von 90°. In dem Stapel liegen die Platten so übereinander, dass sich Eintrittsöffnungen (2) und Durchtrittsöffnungen (9) abwechseln und zwei im Innern des Mischers liegende Nebenkanäle zum Zuführen von zwei Eduktströmen bilden. Die Mischzone kann mit einem Gehäuse einen Hauptkanal zum Abführen des Produktstroms bilden, sie kann aber auch zur Umgebung offen sein. Die nach außen offene Bauweise ist insbesondere bevorzugt, wenn es sich bei dem Mikromischer um einen Mikroreaktor zur Verbrennung fluider Medien, z.B. brennbarer Gase oder Flüssigkeiten handelt. Eine als Gasreaktor ausgebildete Ausführungsform weist mindestens einen ersten Anschluß zur Zuführung eines brennbaren Mediums und mindestens einen zweiten Anschluß zur Zuführung eines die Verbrennungsreaktion fördernden Mediums, insbesondere eines sauerstoffhaltigen Gases, wie z.B. Luft auf. Die Zuführung des brennbaren Mediums und des die Verbrennung fördernden Mediums kann über jeweils einen der beiden Nebenkanäle erfolgen.

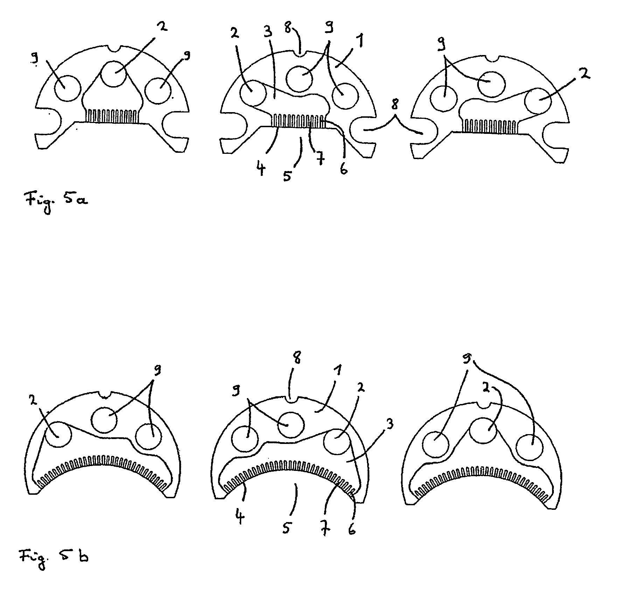

Weitere Ausführungsformen sind in Fig. 5a und Fig. 5b dargestellt. Die Platten (1) weisen je eine umschlossene Eintrittsöffnung (2) und je zwei umschlossene Durchtrittsöffnungen (9) auf. Jede Eintrittsöffnung (2) ist mit je einem, in der Plattenebene durch eine Vertiefung ausgebildeten Verbindungskanal (3) verbunden. Jeder Verbindungskanal (3) wird durch eine Vielzahl von Mikrostruktureinheiten (6) in eine Vielzahl von Teilkanälen (7) aufgespalten. Die Teilkanäle (7) münden durch am Rand der Platten angeordnete Austrittsöffnungen (4) in eine außerhalb der Plattenfläche liegende Mischzone (5). Die Austrittsöffnungen (4) können auf geraden Linien (Fig. 5a) oder auf Bogensegmenten (Fig. 5b) angeordnet sein, wobei die Bogensegmente konvex oder konkav sein können. Die Eintrittsöffnungen (2) und die Durchtrittsöffnungen (9) sind als Durchbrüche in den Platten ausgebildet. Die Mikrostruktureinheiten können parallel oder in verschiedenen Winkeln zur durch den Verbindungskanal vorgegebenen Fließrichtung angestellt sein. Wenn die Platten rund ausgebildet sind, weisen sie vorzugsweise am Rand Aussparungen (8) auf, welche mit Halterungselementen (14) in einem Gehäuse (11) zusammenwirken können, um ein Verdrehen oder Verrutschen der Platten zu vermeiden. Ein Mikromischer weist vorzugsweise einen Stapel von mehreren, aufeinander liegenden Bauteilen auf, wobei sich Platten der drei verschiedenen Typen gemäß Fig. 5a bzw. 5b jeweils abwechseln und sich ein Aufbau mit alternierender Schichtstruktur ABCABC ergibt. Hierdurch wird erreicht, dass jeweils verschiedene Eduktströme unmittelbar benachbart über- und untereinander der Mischzone (5) zugeführt werden können. Vorzugsweise sind die Winkel der Teilkanäle bei der Mündung in die Mischzone in Relation zur Umfangslinie der Mischzone in benachbarten Platten verschieden, besonders bevorzugt haben sie entgegengesetzte Abweichungen von 90°. In dem Stapel liegen die Platten (1) so übereinander, dass sich Eintrittsöffnungen (2) und Durchtrittsöffnungen (9) abwechseln und drei im Innern des Mischers liegende Nebenkanäle zum Zuführen von bis zu drei verschiedenen Eduktströmen bilden. Die Mischzone (5) kann mit einem Gehäuse einen Hauptkanal zum Abführen des Produktstroms bilden, sie kann aber auch zur Umgebung offen sein. Die nach außen offene Bauweise ist insbesondere bevorzugt, wenn es sich bei dem Mikromischer um einen Mikroreaktor zur Verbrennung fluider Medien, z.B. brennbarer Gase oder Flüssigkeiten handelt.

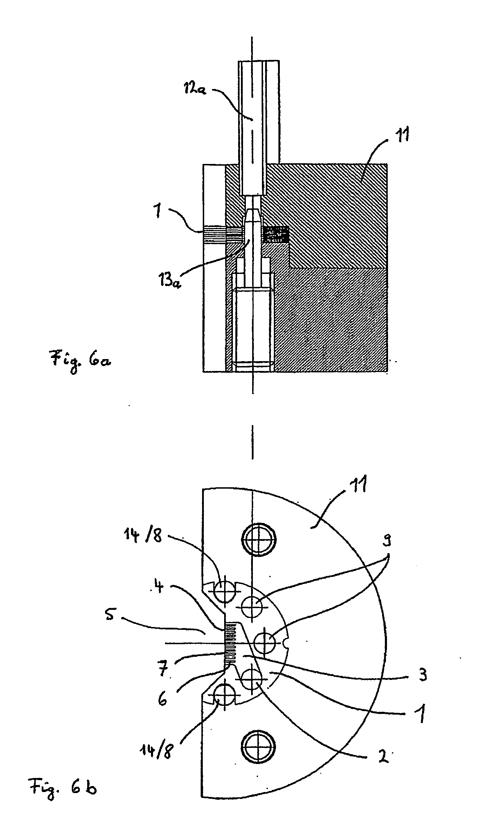

In Fig. 6a ist in Form eines Längsschnitts der schematische Aufbau einer Ausführungsform eines statischen Mikromischers dargestellt. Ein Gehäuse (11) weist Fluidzuführungen (12a) auf. In dem Gehäuse (11) ist ein Stapel aus mehreren erfindungsgemäßen Mischerplatten (1) enthalten. Die Ein- und/oder Durchtrittsöffnungen der Platten können mittels einer vorzugsweise senkrecht zur Plattenebene beweglichen Verschlußvorrichtung (13a) verschlossen und geöffnet werden. Der Mikromischer kann als Reaktor zur Durchführung chemischer Reaktion, insbesondere als Gasbrenner eingesetzt werden.

Bei Verbrennungsreaktoren kann die Mischzone, in der die Verbrennungsreaktion abläuft, außerhalb des Gehäuses liegen. Bei anderen chemischen Reaktoren und Mischern kann die Mischzone innerhalb des Gehäuses liegen und die Mischung kann über eine geeignete Fluidabführung abgeführt werden. Bei Verbrennungsreaktoren ist vorzugsweise in räumlicher Nähe zur Mischzone ein geeigneter Zündmechanisumus und/oder eine Start- oder Stützflamme angeordnet.

In Fig. 6b ist der Querschnitt eines statischen Mischers dargestellt. In einem Gehäuse (11) ist eine Mischerplatte (1) eingebaut, die mittels Aussparungen (8) und Halterungselementen (14) in Position gehalten wird. Als Mischerplatte ist beispielhaft eine solche gemäß Fig. 5a dargestellt.

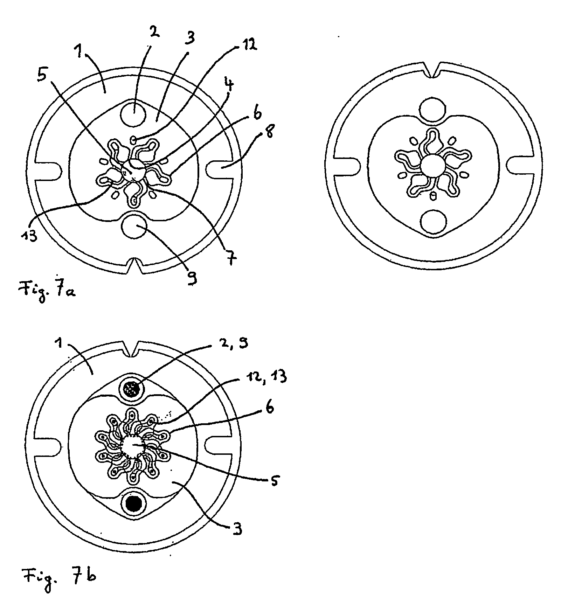

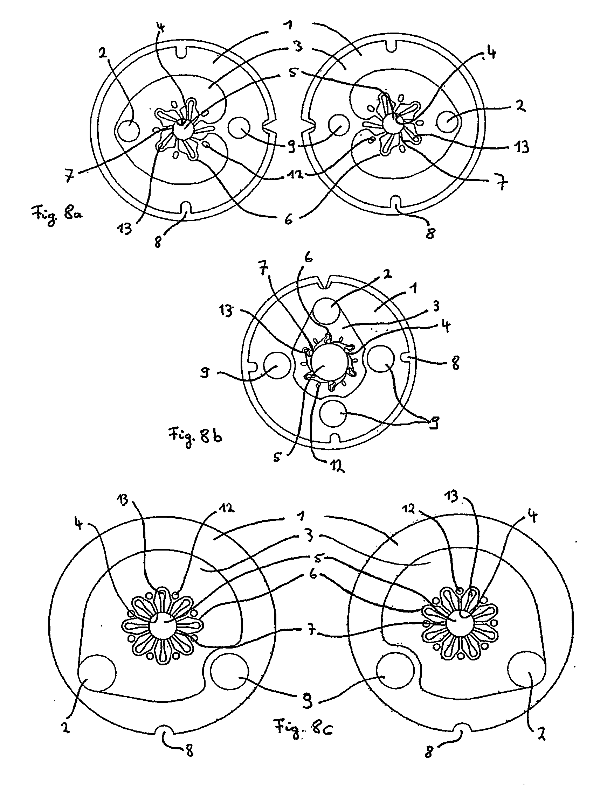

Weitere, bevorzugte Ausführungsformen sind in Fig. 7a-b und Fig. 8a-c dargestellt. Bei diesen Ausführungsformen weisen die Platten (1) nebeneinanderliegende Teilkanäle (7) und (13) auf, die abwechselnd von verschiedenen Eduktströmen durchströmt werden können und so verschiedene Eduktströme in einer Ebene unmittelbar benachbart der Mischzone (5) zugeführt werden können.

Die in Fig. 7a dargestellten Platten (1) weisen jeweils eine umschlossene Eintrittsöffnung (2), eine umschlossene Mischzone (5) und eine umschlossene Durchtrittsöffnung (9) auf. Die Eintrittsöffnung (2) ist mit einem in der Plattenebene durch eine Vertiefung ausgebildeten Verbindungskanal (3) verbunden, welcher durch eine Vielzahl von Mikrostruktureinheiten (6) in eine Vielzahl von Teilkanälen (7) aufgespalten wird. Die Teilkanäle (7) münden durch die Austrittsöffnungen (4) in die Mischzone (5). Die Austrittsöffnungen (4) sind auf einer kreisförmigen Linie um die Mischzone (5) herum angeordnet. Mischzone (5), Eintrittsöffnung (2) und Durchtrittsöffnung (9) sind als Durchbrüche in der Platte ausgebildet. In den Mikrostruktureinheiten (6) sind vertieft ausgebildete weitere Teilkanäle (13) integriert, welche gegenüber dem Verbindungskanal (3) abgeschirmt sind und in die Mischzone (5) münden. Die Teilkanäle (7) und die weiteren Teilkanäle (13) sind abwechselnd benachbart angeordnet. Die Platten weisen zusätzliche Durchbrüche (12) auf, wobei die Anzahl der Durchbrüche (12) und die Anzahl der zusätzlichen Teilkanäle (13) gleichgroß sind. Die Durchbrüche (12) sind so angeordnet, dass sie, wenn eine Platte (1) um 180° verdreht auf eine zweite Platte (1) gelegt wird, jeweils oberhalb der zusätzlichen Teilkanäle (13) der darunter liegenden Platte liegen. Ein durch die Eintrittsöffnung (2) in den Verbindungskanal (3) strömender Eduktstrom kann durch die Durchbrüche (12) in einen zusätzlichen Teilkanal (13) einer darunterliegenden Platte fließen. Die Winkel benachbarter Teilkanäle (7) und (13) zueinander und in Bezug auf die Umfangslinie der Mischzone können verschieden sein. In Fig. 7a haben die Winkel der Teilkanäle (7) gegenüber den Winkeln der zusätzlichen Teilkanäle (13) in Bezug auf die Umfangslinie der Mischzone (5) entgegengesetzte Abweichungen von 90°. Dadurch weisen die Austrittsöffnungen von je zwei Teilkanälen paarweise aufeinander zu. Dadurch können zwei verschiedene Eduktströme aufeinander zugeführt werden. Die Teilkanäle können aber auch parallel im rechten Winkel oder schräg zur Mischzone verlaufen. Fig. 7a zeigt nebeneinander zwei identische, um 180° verdrehte Platten (1). Fig 7b zeigt schematisch zwei um 180° verdreht aufeinandergelegte Platten. Ein Mikromischer weist vorzugsweise einen Stapel von mehreren, aufeinanderliegenden Bauteilen auf, wobei Platten gemäß Fig. 7a abwechselnd um 180° verdreht übereinander liegen. Hierdurch wird erreicht, dass zwei verschiedene Eduktströme sowohl unmittelbar benachbart über- und untereinander als auch unmittelbar benachbart nebeneinander der Mischzone (5) zugeführt werden können. In dem Stapel liegen die Platten so übereinander, dass sich Eintrittsöffnungen (2) und Durchtrittsöffnungen (9) abwechseln und zwei Nebenkanäle zum Zuführen von zwei Eduktströmen bilden und die Mischzonen einen Hauptkanal zum Abführen des Produktstroms bilden. Über den Hauptkanal kann aber auch ein die spätere kontinuierliche Phase der Mischung bildendes Fluid zugeführt werden. Außerdem liegen die Platten so übereinander, dass jeder zusätzliche Durchbruch (12) einer Platte mit je einem zugehörigen zusätzlichen Teilkanal (13) einer benachbarten Platte kommunizierend verbunden ist.

In Fig. 8a ist eine Ausführungsform ähnlich derjenigen der Fig. 7a dargestellt, mit dem Unterschied, dass die Teilkanäle (7) und die zusätzlichen Teilkanäle (13) parallel in gleichen Winkeln der Mischzone (5) schräg zugeführt werden.

Die linke Platte der Fig. 8a unterscheidet sich dabei von der rechten Platte dadurch, dass der Winkel der Teilkanäle (7) und (13) zur Umfangslinie der Mischzone (5) eine entgegengesetzte Abweichung von 90° aufweist. Ein Mikromischer weist vorzugsweise einen Stapel von mehreren, aufeinander liegenden Bauteilen auf, wobei sich linke und rechte Platten gemäß Fig. 8a abwechseln und sich ein Aufbau mit alternierender Schichtstruktur ABAB ergibt. Hierdurch wird erreicht, dass zwei verschiedene Eduktströme unmittelbar benachbart über- und untereinander der Mischzone (5) in entgegensetzten Winkeln zugeführt werden können.

In Fig. 8c ist eine Ausführungsform ähnlich derjenigen der Fig. 8a dargestellt, mit dem Unterschied, dass die Teilkanäle (7) und die zusätzlichen Teilkanäle (13) parallel und senkrecht zur Mischzone (5) zugeführt werden. Ein Mikromischer weist vorzugsweise einen Stapel von mehreren, aufeinanderliegenden Bauteilen auf, wobei sich linke und rechte Platten gemäß Fig. 8c abwechseln und sich ein Aufbau mit alternierender Schichtstruktur ABAB ergibt. In dem Stapel liegen die Platten so übereinander, dass sich Eintrittsöffnungen (2) und Durchtrittsöffnungen (9) abwechseln und zwei Nebenkanäle zum Zuführen von zwei Eduktströmen bilden und die Mischzonen einen Hauptkanal zum Abführen des Produktstroms bilden. Außerdem liegen die Platten so übereinander, dass jeder zusätzliche Durchbruch (12) einer Platte mit je einem zugehörigen zusätzlichen Teilkanal (13) einer benachbarten Platte kommunizierend verbunden ist. Hierdurch wird erreicht, dass zwei verschiedene Eduktströme sowohl unmittelbar benachbart über- und untereinander als auch unmittelbar benachbart nebeneinander der Mischzone (5) zugeführt werden können.

Eine weitere Ausführungsform ist in Fig. 8b dargestellt. Eine Platte (1) weist eine umschlossene Eintrittsöffnung (2), drei umschlossene Durchtrittsöffnungen (9) und eine umschlossene Mischzone (5) auf. Die Eintrittsöffnung (2) ist mit einem in der Plattenebene durch eine Vertiefung ausgebildeten Verbindungskanal (3) verbunden, welcher durch eine Vielzahl von Mikrostruktureinheiten (6) in eine Vielzahl von Teilkanälen (7) aufgespalten wird. Die Teilkanäle (7) münden durch die Austrittsöffnungen (4) in die Mischzone (5). Die Austrittsöffnungen (4) sind auf einer kreisförmigen Linie um die Mischzone (5) herum angeordnet. Mischzone (5), Eintrittsöffnung (2) und Durchtrittsöffnung (9) sind als Durchbrüche in der Platte ausgebildet. In den Mikrostruktureinheiten (6) sind vertieft ausgebildete weitere Teilkanäle (13) integriert, welche gegenüber dem Verbindungskanal (3) abgeschirmt sind und in die Mischzone (5) münden. Die Teilkanäle (7) und die weiteren Teilkanäle (13) sind abwechselnd benachbart angeordnet. Die Platten weisen zusätzliche Durchbrüche (12) auf, wobei die Anzahl der Durchbrüche (12) und die Anzahl der zusätzlichen Teilkanäle (13) gleichgroß sind. Die Durchbrüche (12) sind so angeordnet, dass sie, wenn eine Platte (1) um 90° verdreht auf eine zweite Platte (1) gelegt wird, jeweils oberhalb der zusätzlichen Teilkanäle (13) der darunter liegenden Platte liegen. Ein durch die Eintrittsöffnung (2) in den Verbindungskanal (3) strömender Eduktstrom kann durch die Durchbrüche (12) in einen zusätzlichen Teilkanal (13) einer darunterliegenden Platte fließen. Die Winkel benachbarter Teilkanäle (7) und (13) zueinander und in Bezug auf die Umfangslinie der Mischzone können verschieden sein. In Fig. 8b haben die Winkel der Teilkanäle (7) gegenüber den Winkeln der zusätzlichen Teilkanäle (13) in Bezug auf die Umfangslinie der Mischzone (5) eine von 90° entgegengesetzte Abweichung. Dadurch weisen die Austrittsöffnungen von je zwei Teilkanäle paarweise aufeinander zu. Dadurch können zwei verschiedene Eduktströme aufeinander zugeführt werden. Die Teilkanäle können aber auch parallel im rechten Winkel oder schräg zur Mischzone verlaufen. Ein Mikromischer weist vorzugsweise einen Stapel von mehreren, aufeinanderliegenden Bauteilen auf, wobei Platten gemäß Fig. 8b in beliebiger Reihenfolge um 90°, 180° oder 270° verdreht übereinander liegen. Hierdurch wird erreicht, dass verschiedene Eduktströme sowohl unmittelbar benachbart über- und untereinander als auch unmittelbar benachbart nebeneinander der Mischzone (5) zugeführt werden können. Insgesamt können bis zu vier verschiedene Edukte mit dem Mikromischer vermischt werden. In dem Stapel liegen die Platten so übereinander, dass sich Eintrittsöffnungen (2) und Durchtrittsöffnungen (9) abwechseln und insgesamt vier Nebenkanäle zum Zuführen von bis zu vier Eduktströmen bilden und die Mischzonen einen Hauptkanal zum Abführen des Produktstroms bilden. Über den Hauptkanal kann aber auch ein die spätere kontinuierliche Phase der Mischung bildendes Fluid zugeführt werden. Außerdem liegen die Platten so übereinander, dass jeder zusätzliche Durchbruch (12) einer Platte mit je einem zugehörigen zusätzlichen Teilkanal (13) einer benachbarten Platte kommunizierend verbunden ist.

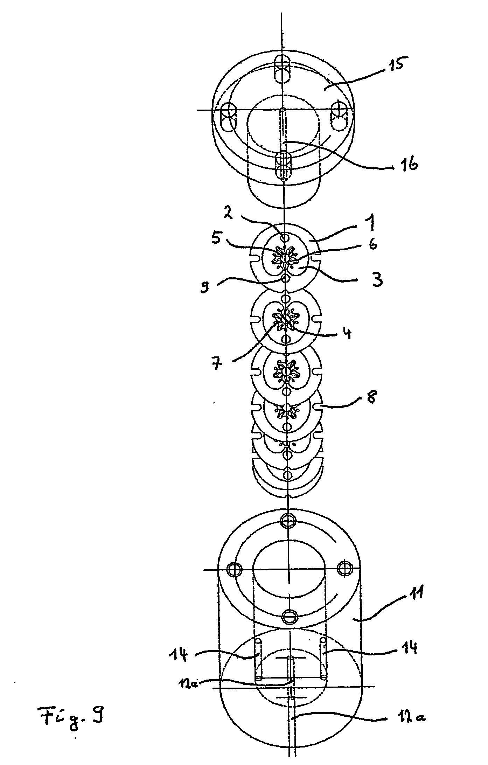

In Fig. 9 ist beispielhaft eine mögliche Ausführungsform eines erfindungsgemäßen Mikromischers in einer Explosionsdarstellung dargestellt. Ein Gehäuse (11) enthält einen Stapel an erfindungsgemäßen Bauteilen in Form von Platten (1). Dargestellt ist beispielhaft ein Stapel aus mehreren Platten gemäß Fig. 8a, es können aber auch andere erfindungsgemäße Platten verwendet werden, wobei gegebenenfalls die Gehäuseform, Anzahl und Position der Fluidzu- und abführungen etc. anzupassen sind. Die Platten (1) werden so eingesetzt, dass die Aussparungen (8) mit den Halterungselementen (14) zusammenwirken, um ein Verdrehen der Platten zu verhindern. Das Gehäuse weist zwei Fluidzuführungen (12a) zur Zuführung der Edukte auf. Das Gehäuse kann mit einem Deckel (15) verschlossen werden, welcher eine Fluidabführung (16) aufweist.

### Bezugszeichenliste

1 Platte
2 Eintrittsöffnung
3 Verbindungskanal
4 Austrittsöffnung
5 Mischzone
6 Mikrostruktureinheit
7 Teilkanal
8 Aussparung
9 Durchtrittsöffnung
10 Einbauten
11 Gehäuse
12 Durchbruch
12a Fluidzuführung
13 zusätzlicher Teilkanal
13a Verschlußvorrichtung
14 Halterungselement
15 Deckel
16 Fluidabführung

## Patentansprüche

1. Statischer Mikromischer, der
- ein Gehäuse (11) mit mindestens 2 Fluidzuführungen (12a) und mindestens einer Fluidabführung (16) und
- mindestens 2 im Gehäuse (11) zu einem Stapel angeordnete Platten (1)aufweist,
- wobei die Platten (1) so übereinanderliegen, dass die Eintrittsöffnungen (2) Nebenkanäle zum Zuführen des jeweiligen Eduktstroms und die Mischzonen (5) einen Hauptkanal zum Abführen des Produktstroms bilden und sich die Haupt- und Nebenkanäle durch den Stapel erstrecken, **dadurch gekennzeichnet, dass** die mindestens 2 im Gehäuse (11) angeordneten Platten (1) derart als Bauteile ausgebildet sind, dass die Platte (1)
- mindestens eine Eintrittsöffnung (2) für den Eintritt mindestens eines Eduktstroms in einen in der Plattenebene liegenden Verbindungskanal (3) und mindestens eine Austrittsöffnung (4) für den Austritt des Eduktstroms in eine in der Plattenebene liegende Mischzone (5) aufweist,
- wobei die Eintrittsöffnung (2) mit der Austrittsöffnung (4) durch den in der Plattenebene liegenden Verbindungskanal (3) kommunizierend verbunden ist,
- wobei der Verbindungskanal (3) vor der Mündung in die Mischzone (5) durch Mikrostruktureinheiten (6) in zwei oder mehr Teilkanäle (7) aufgespalten wird, wobei die Breiten der Teilkanäle im Millimeter bis Submillimeterbereich liegen und kleiner sind als die Breite der Mischzone (5), und
- wobei das Verhältnis der größten Breite des Verbindungskanals (3) zur Breite der Teilkanäle (7) an deren Austritt in die Mischzone (5) größer 2 ist.

2. Mikromischer nach Anspruch 1, **dadurch gekennzeichnet, dass** die Verbindungskanäle (3) der Platten (1) durch Vertiefungen ausgebildet sind und die Verbindungskanäle (3) vor der Mündung in die Mischzone (5) durch auf den Platten angebrachten Mikrostruktureinheiten (6) in Teilkanäle (7) aufgespalten werden.

3. Mikromischer nach Anspruch 1, **dadurch gekennzeichnet, dass** die Verbindungskanäle (3) der Platten (1) durch Ausnehmungen in den Platten (1) gebildet sind, wobei die Platten (1) als Zwischenplatten zwischen je einer Deck- und einer Bodenplatte angeordnet sind und die Verbindungskanäle (3) vor der Mündung in die Mischzone (5) durch an den Deck- und/oder Bodenplatten angebrachten Mikrostruktureinheiten (6) in Teilkanälen(7) aufgespalten werden.

4. Mikromischer nach einem der Ansprüche, **dadurch gekennzeichnet, dass** ein Wärmetauscher integriert ist.

5. Mikromischer nach Anspruch 1, **dadurch gekennzeichnet, dass** das Verhältnis der größten Breite des Verbindungskanals (3) und/oder der Breite der Eintrittsöffnung (2) zur Breite der Teilkanäle (7) größer 5 ist.

## Claims

1. Static micromixer that
- has a housing (11) containing at least 2 fluid supplies (12a) and at least one fluid discharge (16) and
- at least 2 plates (1) arranged in the housing (11) in a stack,
- wherein the plates (1) lie on top of one another so that the inlet apertures (2) form side channels to feed the respective stream of starting material and the mixed zones (5) form a main channel to discharge the product stream and the main and side channels extend through the stack, **characterized in that** the at least 2 plates (1) arranged in the housing (11) are designed as components in such a way that the plate (1)
- has at least one inlet aperture (2) for the inflow of at least one stream of starting material into a connection channel (3) lying at the plate level and at least one outlet aperture (4) for the discharge of the stream of starting material into a mixed zone (5) lying at the plate level,
- wherein the inlet aperture (2) is connected in an interactive way with the outlet aperture (4) by the connection channel (3) lying at the plate level,
- wherein in front of the opening in the mixed zone (5), the connection channel (3) is split by micro-structural units (6) into two or more sub-channels (7), wherein the widths of the sub-channels range from millimeters to sub-millimeters and are smaller than the width of the mixed zone (5), and
- wherein the ratio of the greatest width of the connection channel (3) to the widths of the sub-channels (7) at their discharge into the mixed zone (5) is greater than 2.

2. Micromixer according to Claim 1, **characterized in that** the connection channels (3) of the plates (1) are formed by depressions and in front of the opening in the mixed zone (5), the connection channels (3) are split by micro-structural units (6) attached to the plates into sub-channels (7).

3. Micromixer according to Claim 1, **characterized in that** the connection channels (3) of the plates (1) are formed by recesses in the plates (1), wherein the plates (1) are arranged as intermediate plates between a cover plate and a base plate, and in front of the opening in the mixed zone (5), the connection channels (3) are split by micro-structural units (6) attached to the cover and/or base plates into sub-channels (7).

4. Micromixer according to one of the claims, **characterized in that** a heat exchanger is integrated.

5. Micromixer according to Claim 1, **characterized in that** the ratio of the greatest width of the connection channel (3) and/or the width of the inlet aperture (2) to the widths of the sub-channels (7) is greater than 5.

## Revendications

1. Micro mélangeur statique qui présente
- un boîtier (11) avec au moins 2 arrivées de fluide (12a) et au moins une sortie de fluide (16) ainsi que
- au moins 2 plateaux (1) empilés dans le boîtier (11),
- en même temps, les plateaux (1) sont situés l'un au-dessus de l'autre de manière à ce que les orifices d'entrée (2) forment des canaux additionnels pour l'apport des flux de réactifs respectifs et que les zones de mélange (5) forment un canal principal pour l'évacuation du flux de produit et que les canaux principal et additionnels s'étendent à travers l'empilement, **caractérisé en ce qu'**au moins 2 des plateaux (1) agencés dans le boîtier (11) sont conçus de telle manière à ce que le plateau (1)
- présente au moins un orifice d'entrée (2) pour l'introduction d'au moins un flux de réactif dans un canal de liaison (3) positionné dans la partie plane du plateau et au moins un orifice de sortie (4) pour l'évacuation du flux de réactif dans une zone de mélange (5) située dans la partie plane du plateau,
- en même temps, l'orifice d'entrée (2) communique avec l'orifice de sortie (4) par le canal de liaison (3) situé dans la partie plane du plateau,
- le canal de liaison (3) se subdivise avant de déboucher dans la zone de mélange (5) en deux ou plusieurs canaux partiels (7) par l'intermédiaire d'unités micro structurelles (6), alors que les largeurs des canaux partiels sont de l'ordre du millimètre ou décimillimètre et sont inférieures à la largeur de la zone de mélange (5), et
- en même temps, le rapport de la largeur la plus grande du canal de liaison (3) sur la largeur des canaux partiels (7) à leur sortie dans la zone de mélange est supérieur à 2.

2. Micro mélangeur selon la revendication 1, **caractérisé en ce que** les canaux de liaison (3) des plateaux (1) sont formés par des creux et que les canaux de liaison (3) sont subdivisés en canaux partiels (7) par des unités micro structurelles (6) rapportées sur les plateaux avant de déboucher dans la zone de mélange (5).

3. Micro mélangeur selon la revendication 1, **caractérisé en ce que** les canaux de liaison (3) des plateaux (1) sont formés par des évidements dans les plateaux (1), alors que les plateaux (1) sont agencés comme des plateaux intermédiaires entre, respectivement, un plateau de dessus et un plateau de dessous, et que les canaux de liaison (3) avant de déboucher dans la zone de mélange (5) sont subdivisés en canaux partiels (7) par les unités micro structurelles (6) rapportées sur les plateaux de dessus et/ou de dessous.

4. Micro mélangeur selon l'une des revendications, **caractérisé en ce qu'**un échangeur de chaleur s'y trouve intégré.

5. Micro mélangeur selon la revendication 1, **caractérisé en ce que** le rapport de la largeur la plus grande du canal de liaison (3) et/ou la largeur de l'orifice d'entrée (2) sur la largeur des canaux partiels (7) est supérieur à 5.
